# EUROPEAN PATENT SPECIFICATION

(11) **EP 3 441 295 B1**
(45) Date of publication and mention of the grant of the patent: **24.02.2021**
(21) Application number: 18186720.1
(22) Date of filing: 31.07.2018
(51) Int. Cl.: B62L 1/00

(54) **BICYCLE BRAKE DISC**
FAHRRADBREMSSCHEIBE
DISQUE DE FREIN DE BICYCLETTE

(30) Priority: 09.08.2017 IT 201700092546
(43) Date of publication of application: 13.02.2019
(73) Proprietor: Campagnolo S.r.l., 36100 Vicenza (VI) (IT)
(72) Inventor: BEGGIN, Alan, I-35030 Rovolon (Padova) (IT); MEGGIOLAN, Mario, I-36051 CREAZZO (Vicenza) (IT); BOVE, Filippo, I-35129 Padova (IT)
(74) Representative: Porta & Consulenti Associati S.p.A.

(56) References cited:
- CN-A- 104 976 253
- ES-A1- 2 465 943
- TW-U- M 462 809
- US-A- 6 135 248
- US-A1- 2008 264 741
- US-A1- 2010 051 398
- US-A1- 2014 175 857

## Description

The present invention relates to a bicycle brake disc.

Preferably, said bicycle is a racing bicycle.

As known, it is now common in bicycles to use disc brakes. Such brakes are indeed often preferred to conventional brakes of different design in that they ensure a high braking force and a better modularity that allows a marked braking sensitivity, as well as being less subject to problems caused by mud or water.

Typically, a disc brake comprises a caliper fixed onto the frame of the bicycle and a brake disc mounted on the hub of the wheel. Inside the caliper there are two or four opposite brake pads. The brake disc rotates inside the space defined between the opposite pads. By actuating the brake lever, the pads are brought closer to the brake disc, generating friction on the brake disc and, consequently, braking the wheel.

The brake disc comprises a braking track configured to cooperate with the brake pads and a central coupling portion with the hub.

The brake disc can be made in a single piece or in two components.

In the latter case a rotor, comprising the braking track, is physically distinct from the central coupling portion with the hub and is connected to the latter to make the two components fixedly connected to one another.

The rotor is made of a material that ensures good braking characteristics, like for example steel, whereas the central coupling portion with the hub, also called carrier, is typically made of a lighter material, like for example aluminum or light alloys to keep down the total weight of the brake disc.

The rotor usually comprises a plurality of connection arms to the carrier that are in one piece with the braking track and that extend radially inside the latter.

The carrier is equipped with a plurality of connection seats that receive the connection arms of the rotor.

The connection between the connection seats of the carrier and the connection arms of the rotor can be carried out so that the rotor and the carrier are substantially coplanar but not in direct contact. The rotor and the carrier are joined together by rivets or similar that, as well as joining the rotor and the carrier in the radial direction, take care of keeping these two components coplanar.

This type of coupling, also called "floating" avoids the occurrence of mechanical tensions between the carrier and the rotor after the heating of the braking track during braking due to the different thermal expansion coefficients of the two materials from which the rotor and the carrier are made.

Brake discs with floating coupling have the drawback of possible axial movements of the rotor with respect to the carrier, especially when the rotor and the carrier have thicknesses different from one another. In order to minimize such a drawback, there is often a large number of connection arms and of connection seats that, however, increase the weight of the brake disc.

The two components of the brake disc can be coupled together so that there are overlapping regions between the connection arms of the rotor and the connection seats of the carrier, making a so-called non-floating coupling.

In this case rivets or similar are inserted into overlapping holes made in the connection arms and in the connection seats so as to axially lock together the rotor and the carrier and so as to prevent translations of the connection arms with respect to the connection seats. The structural continuity and the axial stability of the entire brake disc is also ensured by the overlapping region between rotor and carrier.

Since a smaller number of coupling arms and of coupling seats are required with respect to the floating solution, non-floating brake discs, for the same materials and sizes, have a lower weight than floating brake discs and are preferred to keep down the total weight of the bicycle.

The Applicant has noted that in non-floating brake discs the braking track is subject to deformations during braking.

In particular, the Applicant has noted that during braking, the heat generated between brake pads and braking track (which can reach and exceed heat powers of 600-800 Watt) causes elastic deformations of the braking track outside of its lying plane.

Such elastic deformations, according to the experience of the Applicant, are of two types; a first type of deformation that tends to deform the entire braking track making it flex in an axial direction outside of its plane and a second type of deformation that engages the portions of braking track that extend between two connection arms and that tends to make such portions of braking track take on a sinusoidal shape.

The Applicant has found that such elastic deformations usually disappear, taking the braking track back into the undeformed condition, when the braking track cools down, typically at the end of the braking action and after a few meters travelled by the bicycle.

The elastic deformations of the first type described above, when not yet disappeared after braking, cause an axial misalignment of the braking track with respect to the brake pads with consequent sliding of the braking track on a brake pad.

The elastic deformations of the second type described above, when not yet disappeared after braking, generate an alternate sliding of the braking track on one and the other brake pad.

In both cases, as well as deteriorating the performance of the cyclist, the elastic deformations of the braking track can cause anomalous consumption of the brake pads. The prior art document US 2008/264741 discloses a bicycle brake disc in accordance with the preamble of claim 1.

The present invention therefore relates to a bicycle brake disc according to claim 1.

Under the term "degree of rotational freedom" it is meant a kinematic constraint that does not oppose rotations about an axis.

Under the term "geometric center", it is meant the point inside a perimeter that would correspond to the center of mass (barycenter) of a right prism with base having the same shape as such a perimeter.

The terms "axial" and "axially" refer to a direction substantially coinciding with or substantially parallel to a rotation axis of the brake disc, which substantially coincides with a rotation axis of the wheel of the bicycle, whereas the terms "radial", "radially" and similar refer to a direction that lies in a plane substantially perpendicular to the rotation axis of the brake disc and that passes through such a rotation axis.

Under the term "radially inner" and "radially outer" it is meant a position respectively closer to and further from the rotation axis of the brake disc.

Under the term "circumferential" it is meant a direction along a rotation direction of the brake disc.

By equipping the constraint between at least one coupling seat of the rotor and the respective coupling seat of the carrier with a degree of translational freedom, the two coupling seats can translate with respect to one another.

The Applicant deems that in this way the tensions inside the rotor (induced by the heating of the braking track) can be reduced through a translation of the coupling seat of the rotor with respect to the coupling seat of the carrier along the direction in which the constraint between the two coupling seats has a degree of translational freedom.

The Applicant deems that this avoids, or at least limits, the elastic (and plastic) deformations of the rotor that tend to deform the rotor.

This avoids, or at least reduces, undesired sliding of the braking track on the brake pads at the end of a braking action.

The bicycle brake disc of the present invention can comprise one or more of the following preferred features, taken individually or in combination.

Preferably, at least a number of connection areas equal to half, rounded up or down, of the total number of connection areas, has a constraint between the coupling seat of the rotor and the respective coupling seat of the carrier having a degree of translational freedom.

In this way, the tensions (or stresses) inside the rotor generated during braking can be discharged in many areas, further decreasing the elastic deformation of the braking track that cause undesired sliding against the brake pads.

Preferably, the connection areas having a constraint with a degree of translational freedom are alternated with connection areas without constraint with a degree of translational freedom.

Alternatively, all of the connection areas have a degree of translational freedom between the coupling seat of the rotor and the coupling seat of the carrier.

Preferably, at least two of the connection areas having a constraint with a degree of translational freedom are circumferentially consecutive.

In said connection area having a degree of translational freedom, said coupling seat of the rotor and/or said coupling seat of the carrier has a first dimension and a second dimension, wherein the first and the second dimension are respectively measured on a first reference axis and a second reference axis lying on a first reference plane, wherein the second reference axis intersects the first reference axis in an intersection point, wherein said first dimension is greater than the second dimension.

Preferably, said intersection point between the first reference axis and the second reference axis defines a geometric center of the coupling seat of the rotor and/or of the coupling seat of the carrier.

Preferably, said degree of translational freedom is directed along the first reference axis.

The coupling seat of the rotor and the coupling seat of the carrier are thus mutually mobile along the first reference axis.

Preferably, said first dimension is at least 1.5% greater than the second dimension.

Such an amount defines, in absolute value, the minimum amount with respect to which the coupling seat of the rotor can move, along the first reference axis, with respect to the coupling seat of the carrier.

Preferably, said first reference plane is perpendicular to said rotation axis.

The coupling seat of the rotor and the coupling seat of the carrier are thus mutually mobile along a direction perpendicular to the rotation axis.

Preferably, said second reference axis is substantially perpendicular to said first reference axis.

Preferably, said first reference axis forms an angle comprised in absolute value between 0 and 80° with respect to a second reference plane perpendicular to the first reference plane and containing said rotation axis, said angle being measured in a radially outer direction with respect to said intersection point.

The Applicant has found that by suitably selecting the first reference axis, in other words by suitably selecting the direction with respect to which the coupling seat of the rotor can translate with respect to the coupling seat of the carrier, it is possible to maximize the effect caused by the degree of translational freedom.

In particular, the Applicant has found that by selecting such a direction so that it is aligned as possible with the direction of transfer of forces between the rotor and the carrier during braking, the deformation of the braking track is minimal.

The direction of transfer of forces between rotor and carrier is usually comprised in the aforementioned range of the angle formed between the first reference axis and the second reference plane.

Preferably, any two first reference axes are not perpendicular to one another.

In this way, when all of the connection areas are engaged by a constraint having a degree of translational freedom, the coupling seat of the rotor can translate rigidly with the braking track with respect to the respective coupling seat of the carrier, allowing the braking track to discharge the internal tensions without deforming (or deforming little).

Alternatively, at least two first reference axes are perpendicular to each other.

In this case, the coupling seat of the rotor cannot translate rigidly with the braking track with respect to the respective coupling seat of the carrier.

The Applicant has noted that this does not necessarily cause an elastic deformation of the braking track, since a possible elongation of the coupling seat of the rotor due to the stresses inside it (caused by the heating of the braking track) would in any case cause a translation of the coupling seat of the rotor with respect to the coupling seat of the carrier, thus giving the stresses inside the rotor a way to discharge without deforming (or deforming little) the braking track.

Preferably, said coupling seat of the rotor and/or said coupling seat of the carrier is within a reference circumference, said reference circumference having a diameter equal to or less than said second dimension.

In this way, it is possible to use a mechanical joint like for example a rivet having a substantially cylindrical stem.

Preferably, said coupling seat of the rotor and/or said coupling seat of the carrier is delimited by a first edge, a second edge and two joining edges that extend respectively between the first and the second edge, wherein the first edge symmetrically mirrors the second edge with respect to said second reference axis and wherein said two joining edges symmetrically mirror one another with respect to said first reference axis.

In this way, the coupling seat of the rotor and/or the coupling seat of the carrier can be made according to an axial-symmetric shape.

Preferably, said two joining edges have a length, measured along a projection on the first reference axis, of at least 1.5% of the second dimension.

The two joining edges therefore define the greater extension of the first distance with respect to the second distance.

Preferably, said first edge has a semi-circular shape.

In this way, the coupling seat of the carrier and/or the coupling seat of the rotor has a substantially elliptical shape.

Preferably, the coupling seat of the rotor and/or the coupling seat of the carrier has, or is defined by, a through hole configured to receive said mechanical joint.

Preferably, the through hole has said first dimension greater than said second dimension.

The through hole with the quoted first direction greater than the second direction, in combination with the mechanical joint, make an example of constraint with a degree of translational freedom between the coupling seat of the rotor and the coupling seat of the carrier.

The through hole can, indeed, slide with respect to the mechanical joint along the first reference axis, in other words in the direction in which the through hole has said first dimension.

Preferably, in each connection area having a degree of translational freedom, the coupling seat of the rotor or the coupling seat of the carrier that does not comprise said through hole comprises a joining hole overlapping said through hole, said joining hole being able to have a reference circumference within it the diameter of which is less than said first dimension of the through hole.

In other words, when the coupling seat of the rotor has the through hole, the coupling seat of the carrier has the joining hole. Alternatively, when the coupling seat of the carrier has the through hole, the coupling seat of the rotor has the joining hole.

Preferably, the reference circumference of the joining hole has the same radius as a reference circumference within the through hole.

Preferably, the through hole is formed on, or is defined by, the coupling seat of the rotor.

Preferably, said mechanical joint is a rivet inserted in the through hole and in the joining hole; said rivet not contacting the entire edge that delimits the through hole.

This allows the assembly of rivet and through hole to make the constraint with degree of translational freedom.

Preferably, the constraint between at least one coupling seat of the rotor and a coupling seat of the carrier in a respective connection area also has a degree of rotational freedom.

Preferably, the degree of rotational freedom is with respect to an axis perpendicular to a reference plane on which the direction in which the constraint lies has a degree of translational freedom.

In this way, torques about such an axis cannot transfer between the coupling seat of the rotor and the coupling seat of the carrier.

Preferably, said rotor comprises at least one coupling arm that extends radially inwards from said braking track, at least one of said coupling seats of the rotor being arranged on an end of said coupling arm.

Preferably, each coupling arm is connected to said braking track in a portion of the braking track comprised between two circumferential end points; each first reference axis passing through the respective connection area and intersecting a reference segment passing through the two circumferential end points.

The Applicant has found that in at least some embodiments, the direction of transfer of forces between rotor and carrier intersects said reference segment and passes through the connection area.

Preferably, each coupling arm is circumferentially delimited by a first outer edge and a second outer edge, wherein said first reference axis is aligned, at least at said connection area, with a direction comprised between said first and said second outer edge.

Further features and advantages of the invention will become clearer from the description of preferred embodiments thereof, made with reference to the attached drawings, where:
- figure 1 is a perspective view of a bicycle brake disc in accordance with the present invention;
- figure 2 is a front view of the brake disc of figure 1;
- figure 3 is a side view of the brake disc of figure 1;
- figure 4 is an enlarged view of a detail of the brake disc of figure 1;
- figure 5 is an enlarged view of a further detail of the brake disc of figure 1;
- figure 6 is a section view along the plane VI-VI of the detail of figure 5;
- figure 7 is an enlarged view of a detail of the brake disc of figure 1 in a variant embodiment; and
- figure 8 represents the brake disc of figure 2 indicating some axes and reference planes useful for better understanding the present invention.

With reference to the attached figures, reference numeral 10 wholly indicates a bicycle brake disc in accordance with the present invention.

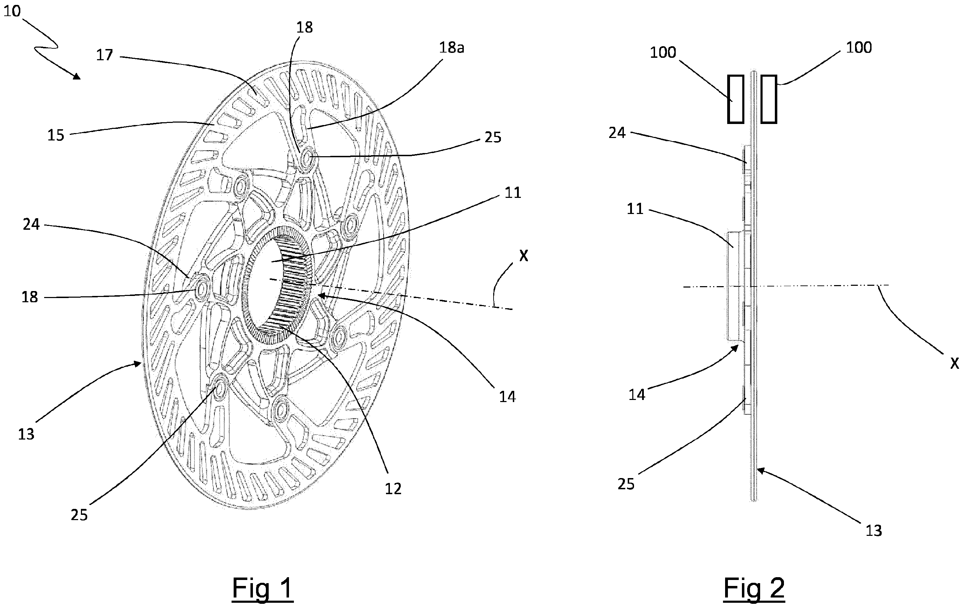

The brake disc 10 is configured to be mounted on a hub (not illustrated) of a wheel of the bicycle between brake pads 100 (schematized in figure 2) of a brake caliper.

The brake disc 10 rotates freely about a rotation axis X inside the space defined between the opposite brake pads 100 and by actuating a brake lever (not illustrated), the brake pads 100 are brought towards the brake disc 10, generating friction on the brake disc 10 and, consequently, braking the wheel.

The brake disc 10 can be coupled with the hub of the wheel in *per se* known ways, for example through a central hole 11 having a grooved surface 12 matching a grooved surface of the hub (like in the embodiment illustrated in the attached figures) or through screws or bolts that axially and rotationally constrain the brake disc 10 to the hub.

The brake disc 10 comprises a rotor 13 and a carrier 14. The carrier 14 is the portion of brake disc intended to be rotationally constrained to the hub of the wheel and the rotor 13 is the portion of brake disc intended to contact the brake pads 100.

The carrier 14 is preferably made of aluminum or aluminum alloys, whereas the rotor 13 is preferably made of steel.

The rotor 13 comprises a braking track 15 arranged in radially outer position and configured to rotate between the brake pads 100.

The braking track 15 has a substantially annular extension, and can have an annular shape (like in the example illustrated in the attached drawings) or an undulating or multi-lobed shape to make a so-called daisy-wheel braking track. In any case, regardless of the specific shape of the braking track 15, in the braking track 15 there can be a braking circumference 16 (illustrated in figure 2) having a diameter such as to intercept the brake pads 100.

On the braking track 15 a plurality of through slits 17 of elongated shape can be provided that have the purpose of dissipating part of the heat generated on the braking track 15 during braking.

The rotor 13 comprises a plurality of coupling seats 18 that are arranged radially towards the inside of the braking track 15 and that have the function of connecting the rotor 13 to the carrier 14.

The coupling seats 18 are preferably made in one piece with the braking track 15.

Each coupling seat 18 is formed at an end of a coupling arm 18a that extends radially inwards from the braking track 16.

The coupling arms 18a can have one or more weight-reduction through openings 19 (like in the embodiment illustrated in the attached figures).

Each coupling arm 18a is circumferentially delimited by a first outer edge 20 and a second outer edge 21 between which one or more of the aforementioned weight-reduction through openings 19 can be provided.

The first 20 and the second outer edge 21 can be parallel to one another or, more preferably not parallel, and can have a rectilinear or curved extension or one given by rectilinear and curved parts.

In any case, the coupling arms 18a comprise a first 22 and a second circumferential end connection point 23 to the braking track 15.

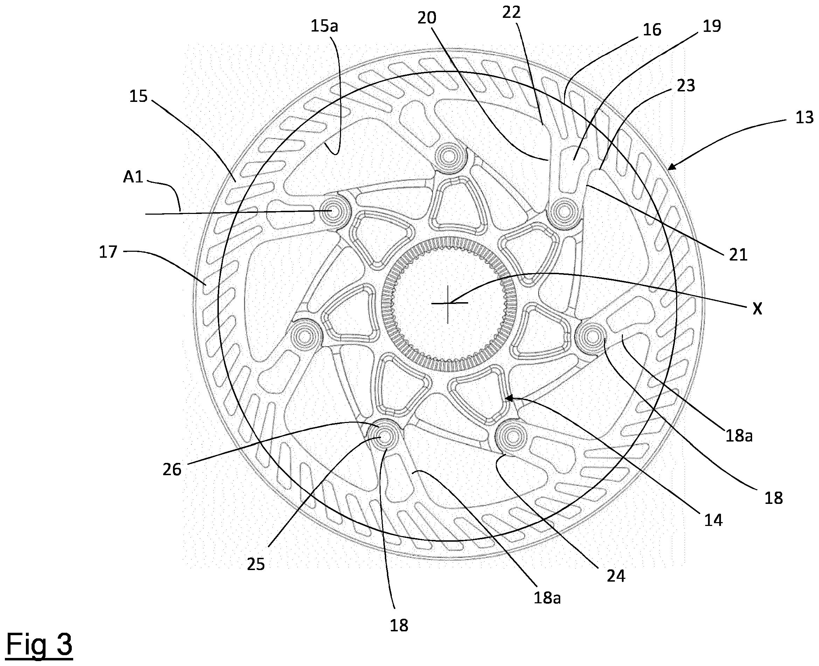

As illustrated in figure 3, the first 22 and the second circumferential end point 23 are arranged in radially outer positions of the coupling arms 18a.

The two end points 22, 23 are defined by the points circumferentially most distant from one another in which the coupling arm 18a connects to the braking track 15.

When the coupling arm 18a is joined with continuity to the braking track 15 (like in the embodiments of the attached figures), such end points 22, 23 are identified by the points of tangency between a radially inner edge 15a of the braking track and the coupling arm 18a.

In any case, the end points 22, 23 are defined by the intersection of an ideal circumference passing through the radially inner edge 15a of the braking track 15 and the coupling arm 18a.

In the case in which the braking track 15 does not have a radially inner edge aligned with a circumference, such an ideal circumference is given by the circumference that passes through the radially outermost point of the radially inner edge 15a of the braking track 15.

The carrier 14 comprises a plurality of coupling seats 24 to receive the coupling seats 18 of the rotor 13 and define connection areas 25 between the rotor 13 and the carrier 14.

In the connection areas 25, the coupling seats 18 of the rotor 13 axially overlap the coupling seats 24 of the carrier 14 and are in direct contact with them, so as to make a non-floating connection.

Each coupling arm 18a is identified between a respective connection area 25 in which it is connected with a respective coupling seat 24 of the carrier 14 and the first 20 and the second outer edge 21.

In the embodiment illustrated in the attached figures, the connection areas 25, the coupling seats 24 of the carrier 14 and the coupling seats 18 of the rotor 13 are seven in number equally circumferentially spaced apart.

In order to axially constrain together the coupling seats 18 of the rotor 13 and the coupling seats 24 of the carrier 14, mechanical joints 26 are provided, preferably rivets.

On at least one connection area 25, the constraint between a coupling seat 18 of the rotor 13 and the respective coupling seat 24 of the carrier 14 has a degree of translational freedom.

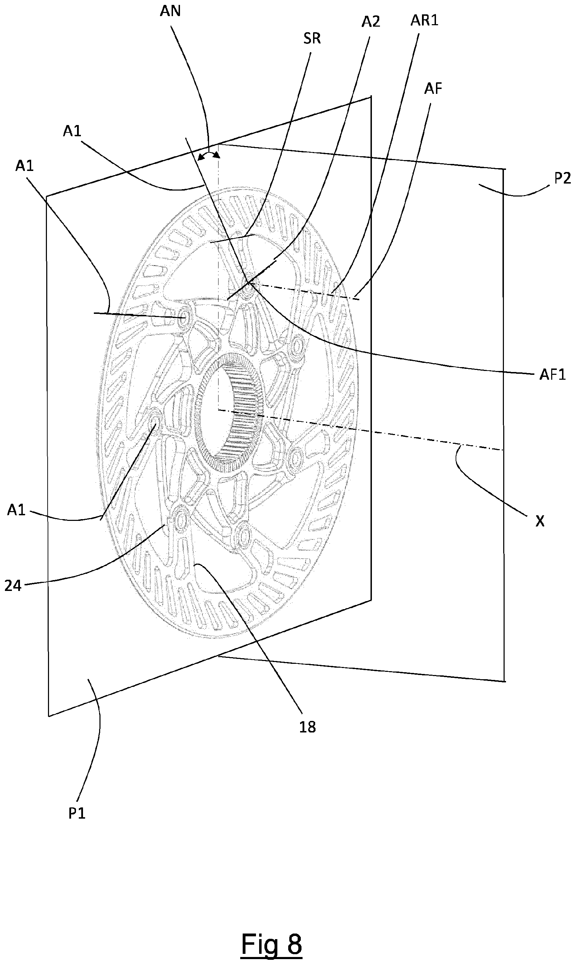

In other words, there is a first reference axis A1 (figure 8) with respect to which the coupling seat 18 of the rotor 13 and the coupling seat 24 of the carrier 14 are not impeded in reciprocal translations.

Such a first reference axis A1 lies in a first reference plane P1 perpendicular to the rotation axis X of the brake disc 10 (figure 8). It should be noted that the first reference plane P1 coincides with, or is parallel to, the lying plane of the braking track 15.

In such a connection area 25, furthermore, the constraint between a coupling seat 18 of the rotor 13 and the coupling seat 24 of the carrier 14 has a degree of rotational freedom with respect to a rotation axis AR1 parallel to the rotation axis of the brake disc 10.

Any other movement of the coupling seat 18 of the rotor 13 with respect to the coupling seat 24 of the carrier 14 is impeded.

In particular, translations along the rotation axis AR1 are impeded by the mutual contact between the coupling seat 18 of the rotor 13 and the coupling seat 24 of the carrier 14 and by the mechanical joint 26.

Translations along a second reference axis A2 contained in the first reference plane P1 and perpendicular to the first reference axis A1 are impeded by the mechanical joint 26.

Rotations about the first reference axis A1 are impeded by the mechanical joint 26.

Rotations about the second reference axis A2 are impeded by the mechanical joint 26.

The first reference axis A1 passes through the connection area 25 and intersects a reference segment SR that passes through the first 22 and the second circumferential end point 23, as illustrated in figure 8.

As represented graphically in figure 8, the first reference axis A1, at the connection area 25, is comprised between the first 20 and the second outer edge 21 of the coupling arm 18a.

The first reference axis A1 forms an angle AN comprised in absolute value between 0 and 80° with respect to a second reference plane P2 perpendicular to the first reference plane P1 and containing the rotation axis X. Such an angle AN is measured in a radially outer direction, as indicated in figure 8.

Preferably, the angle AN is comprised, in absolute value, between 0 and 60°.

In some embodiments, like the one represented in the attached figures, the first reference axis A1 is comprised between the first 20 and the second outer edge 21 of the coupling arm 18a for the entire radial extension of the coupling arm 18a.

In the preferred embodiment of the invention, what has been described above in relation to a connection area 25 is valid for all of the connection areas 25.

Therefore, in the preferred embodiment of the invention, in all of the connection areas 25 the constraint between a coupling seat 18 of the rotor 13 and the respective coupling seat 24 of the carrier 14 has a degree of translational freedom with respect to a respective reference axis A1.

As shown in figure 8, all of the reference axes A1 lie on the same first reference plane P1 and at least two of the reference axes A1 are not parallel to one another.

The degree of translational freedom in each connection area 25 allows a mutual displacement of the coupling seat 18 of the rotor 13 with respect to the respective coupling seat 24 of the carrier 14 along the respective first reference axis A1.

The coupling arms 18a can be shaped so that there are not two first reference axes A1 perfectly perpendicular to one another.

In this configuration, the rotor 13 can move rigidly along the first reference plane P1 with respect to the carrier 14.

The coupling arms 18a can alternatively be shaped so that there are at least two first reference axes A1 perfectly perpendicular to each other.

In this configuration, the rotor 13 cannot move rigidly with respect to the carrier 14, since the rigid movement of the rotor 13 along the first of the two first reference axes would be impeded by the constraint to translation given by the second first reference axis perpendicular to the first of the two first reference axes.

In the preferred embodiment of the invention, each coupling arm 18a has a thickness, measured in the axial direction, that is constant and preferably equal to the thickness of the braking track 15.

The carrier 14 has a thickness in the axial direction that, preferably, is maximum at the groove 12 of the central hole and that decreases at the coupling seats 24, as indicated in figure 2.

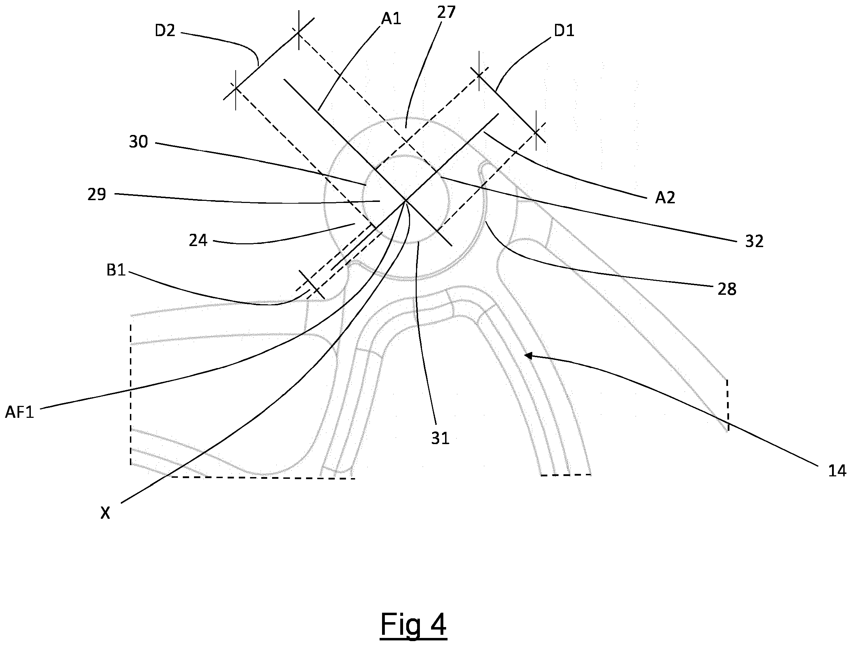

In particular, as better illustrated in figure 4, each coupling seat 24 is formed on a radially outer portion 27 of the carrier 14. The radially outer portion 27 has a thickness in the axial direction reduced by an amount preferably equal to the thickness of the coupling seat 18 of the rotor 13.

A shoulder 28 delimits, in the radially inner direction, the radially outer portion 27. The shape of the shoulder 28, in the preferred embodiment of the invention, is arched.

The radially outer portion 27 is configured to receive in axial abutment the coupling seat 18 of the rotor 13, in particular an end portion 18b of the rotor 13 on which the coupling seat 18 is formed.

It should be noted that the coupling seat 18, and in particular the end portion 18a, does not contact the shoulder 28 of the radially outer portion 27. In particular, the end portion 18b is spaced from the shoulder 28 by a predetermined amount.

As shown in figure 4, the coupling seat 24 of the carrier has, or is defined by, a through hole 29 having a hole axis AF and passing through the geometric center of the hole itself. The hole axis AF coincides with the rotation axis AR1 with respect to which the coupling seat 18 of the rotor 13 and the coupling seat 24 of the carrier 14 have a degree of rotational freedom (as shown in figure 8).

Hereinafter, features of the through hole 29 will be defined which, in the case in which the coupling seat 24 of the carrier 14 is defined by the through hole 29, are directly referable to the coupling seat 24 of the carrier 14.

The through hole 29 is configured to receive the rivet 26.

The through hole 29 has a first dimension D1 measured along the first reference axis A1 and a second dimension D2 measured along the second reference axis A2, which is contained in the first reference plane, is perpendicular to the first reference axis A1 and intersects the hole axis AF.

The first reference axis A1 also intersects the hole axis AF.

It should be noted that the hole axis AF further coincides with the intersection point AF1 between the first reference axis A1 and the second reference axis A2.

The second dimension D2 is substantially equal to the dimension of the stem 26a of the rivet 26 (already caulked) along the second reference axis A2.

In the through hole 29 there can be a reference circumference which has a diameter equal to the second dimension D2.

The first dimension D1 is greater than the second dimension D2.

In particular, the first dimension D1 is at least 1.5% greater than the second dimension D2.

Preferably, the first dimension D1 is at least 3% greater than the second dimension D2.

Preferably, the first dimension D1 is less than 120% of the second dimension D2.

More preferably, the first dimension is about 105% of the second dimension D2.

As an example, a brake disc having diameter of 160 millimeters has a through hole in which the second dimension D2 is 6.05 millimeters and the first dimension D1 is 6.35 millimeters.

The through hole 29 preferably has a regular shape.

In the preferred embodiment of the invention, the through hole 29 has (see figure 4) a first edge 30 and a second edge 31 of semi-circular shape, symmetrical to one another with respect to the second reference axis A2.

The first 30 and the second edge 31 are joined together by two joining edges 32, symmetrical to one another with respect to the first reference axis A1.

The two joining edges 32 preferably have an arched extension to make a substantially elliptical through hole 29.

It should be noted that the extension B1 measured along the first reference axis A1 of the two joining edges 32 defines the difference between the first D1 and the second dimension D2.

In the embodiment represented in figure 4, the first dimension D1 coincides with the larger axis and the second dimension D2 coincides with the smaller axis of the elliptical shape of the through hole 29.

When the rivet 26 is inserted in the through hole 29 and is caulked, the stem 26a of the rivet 26 does not contact all of the edges 30, 31, 32 of the through hole 29.

In particular, the rivet 26 does not contact the entire extension of the first 30 and of the second edge 31.

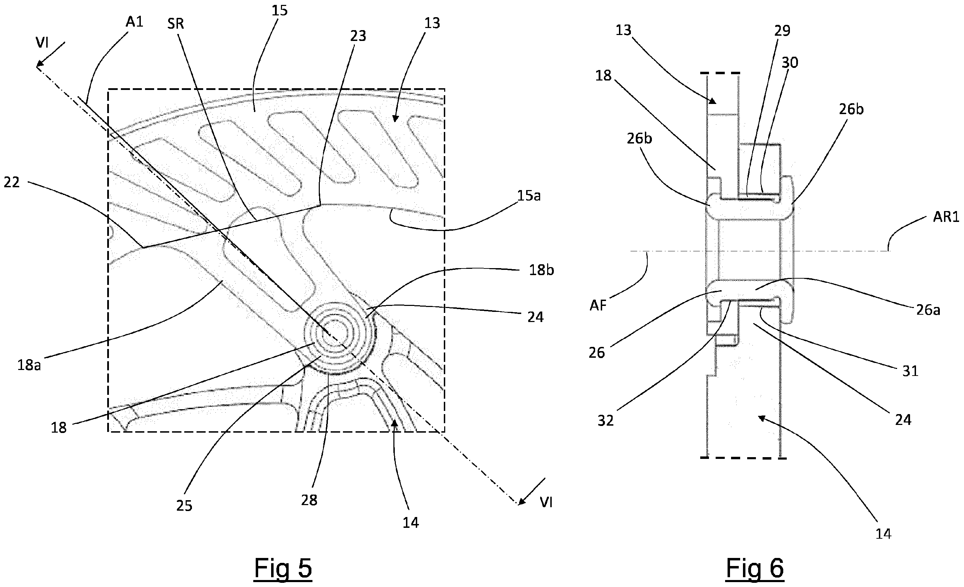

The coupling seat 18 of the rotor 13 has, or is defined by, a joining hole 32, preferably circular or in any case within a circumference. The diameter of the joining hole 32 (figure 6) or of the circumference in the joining hole 32 is substantially equal to the diameter of the stem 26a of the rivet 26 when caulked.

As illustrated in figure 6, the rivet 26 is inserted both in the joining hole 32 and in the through hole 29 and, once caulked, has two opposite heads 26b that respectively act as axial shoulders for the coupling seat 18 of the rotor 13 and for the coupling seat 24 of the carrier 14, avoiding possible reciprocal translations of the rotor 13 with respect to the carrier 14 in the axial direction.

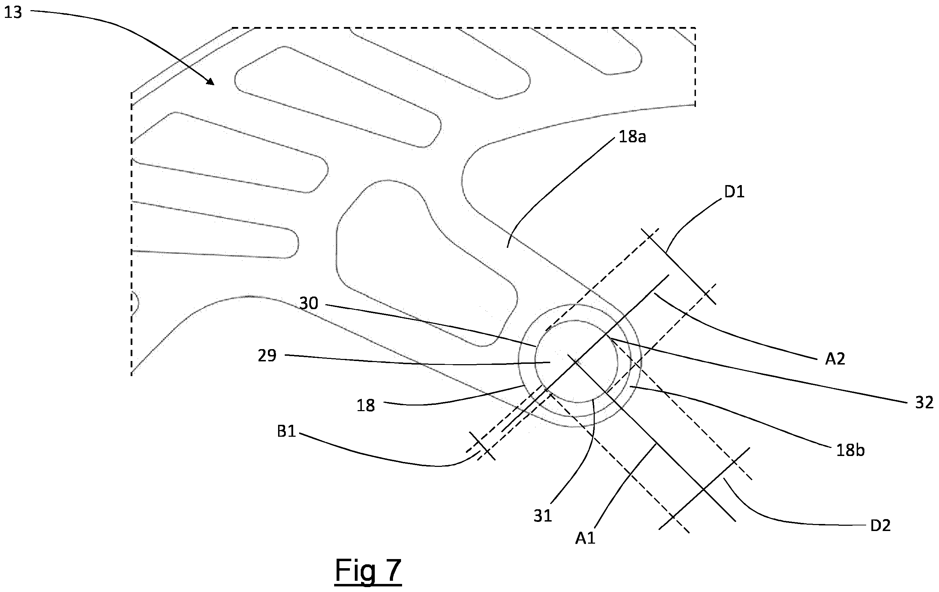

In an alternative embodiment of the present invention shown in figure 7, the coupling seat 18 of the rotor 13 does not comprise the quoted joining hole 32 and comprises, or is defined by, a through hole 29 having the same features as the through hole 29 already described above.

In this embodiment, in which all of the features of the through hole 29 are directly referable to the coupling seat 18 of the rotor 13 in the case in which the through hole 29 defines the coupling seat 18 of the rotor 13, the coupling seat 24 of the carrier 14 can also comprise (or be defined by) a through hole 29 or a joining hole 32 (of the type described above).

In both cases, the degree of translational constraint along the first reference axis A1 is in any case ensured.

During an experimental test a comparison was made between two brake discs of the non-floating type, identical in dimensions, number of coupling seats and connection arms, materials and thicknesses and different only in that one brake disc does not have any constraint with a degree of translational freedom between coupling seat of the rotor and coupling seat of the carrier (hereinafter called conventional brake disc) and the other brake disc comprises a constraint with a degree of translational freedom (in accordance with the above) between all of the coupling seats of the rotor and all of the coupling seats of the carrier (hereinafter called brake disc in accordance with the invention).

During the experimental test each brake disc was set in rotation about its own rotation axis and was suddenly braked with the same braking power (the rotation speed and the stopping time of the two brake discs being the same).

An axial position transducer (a sensing lever) was arranged on each braking track to measure the axial shift of the braking track with respect to the starting axial position.

The experimental test highlighted that during braking, in the conventional brake disc the braking track highlighted oscillations around the undeformed axial position of greater size (about 0.7 millimeters) with respect to the oscillations of the brake disc in accordance with the invention (about 0.1 millimeters). The frequency of oscillation was substantially the same for both brake discs.

Once braking had ended, both brake discs recovered their undeformed position.

The conventional brake disc took about 45 seconds to recover its undeformed condition, whereas the brake disc in accordance with the invention took about 3 seconds to recover its undeformed condition.

Relating the test conditions to the real use of a racing bicycle during a descent, it has been estimated that during the recovery of the undeformed condition of the braking track, the bicycle equipped with the conventional brake disc would have traveled about 50 meters (during which the braking track would have slid in an undesirable manner against the brake pads), whereas the bicycle equipped with the brake disc in accordance with the invention would have traveled only about 4 meters (with clear decrease in the undesired sliding effect of the braking track against the brake pads).

Of course, those skilled in the art can bring numerous modifications and variants to the bicycle brake disc of the present invention in order to satisfy specific and contingent requirements, all of which are in any case encompassed by the scope of protection defined by the following claims.

## Claims

1. Bicycle brake disc (10) comprising:
a carrier (14) having a connection portion (12) configured for connection to a hub of a wheel of the bicycle rotatable about a rotation axis (X) and a plurality of coupling seats (24);
a rotor (13) comprising a radially outer braking track (15) and a plurality of radially inner coupling seats (18) that at least partially axially overlap the coupling seats (24) of the carrier (14) to define connection areas (25);
wherein said rotor (13) and said carrier (14) are joined together by mechanical joints (26) active in said connection areas (25); and the constraint between at least one coupling seat (18) of the rotor (13) and a coupling seat (24) of the carrier (14) in a respective connection area (25) having a degree of translational freedom **characterized in that** in said connection area (25) having a degree of translational freedom, said coupling seat (18) of the rotor (13) and/or said coupling seat (24) of the carrier (14) has, or is defined by, a through hole (29) having an elliptical shape configured to receive said mechanical joint (26) and has a first dimension (D1) and a second dimension (D2), wherein the first (D1) and the second dimension (D2) are respectively measured on a first reference axis (A1) and a second reference axis (A2) lying on a first reference plane (P1) which is perpendicular to said rotation axis (X), wherein the second reference axis (A2) intersects the first reference axis (A1) at an intersection point (AF1), wherein said first dimension (D1) coincides with the larger axis of the elliptical shape of the through hole (29) and is greater than the second dimension (D2) that coincides with the smaller axis of the elliptical shape of the through hole (29) and wherein said degree of translational freedom is directed along the first reference axis (A1).

2. Brake disc (10) according to claim 1, wherein said rotor (13) comprises at least one coupling arm (18a) that extends radially inwards from said braking track (15), at least one of said coupling seats (18) of the rotor (13) being arranged on an end of said coupling arm (18a).

3. Brake disc (10) according to claim 1 or 2, wherein at least a number of connection areas (25) equal to half, rounded down or up, of the total number of connection areas (25), has a constraint between the coupling seat (18) of the rotor (13) and the coupling seat (24) of the carrier (14) having a degree of translational freedom.

4. Brake disc (10) according to any one of the previous claims, wherein connection areas (25) having a constraint with a degree of translational freedom are alternated with connection areas (25) without constraint with a degree of translational freedom.

5. Brake disc (10) according to any one of the previous claims, wherein said intersection point (AF1) between the first reference axis (A1) and the second reference axis (A2) defines a geometric center of the coupling seat (18) of the rotor (13) and/or of the coupling seat (24) of the carrier (14).

6. Brake disc (10) according to claim 2, wherein each coupling arm (18a) is connected to said braking track (15) in a portion comprised between two circumferential end points (22, 23); each first reference axis (A1) passing through the respective connection area (25) and intersecting a reference segment (SR) passing through the two circumferential end points (22, 23).

7. Brake disc (10) according to claim 2, wherein each coupling arm (18a) is circumferentially delimited by a first outer edge (20) and a second outer edge (21), wherein said first reference axis (A1) is aligned, at least at said connection area (25), with a direction comprised between said first (20) and said second outer edge (21).

8. Brake disc (10) according to any one of the previous claims, wherein said second reference axis (A2) is substantially perpendicular to said first reference axis (A1).

9. Brake disc (10) according to any one of the previous claims, wherein said first dimension (D1) is at least 1.5% greater than the second dimension (D2).

10. Brake disc (10) according to any one of the previous claims, wherein said first reference axis (A1) forms an angle (AN) comprised in absolute value between 0 and 80° with respect to a second reference plane (P2) perpendicular to the first reference plane (P1) and containing said rotation axis (X), said angle (AN) being measured in the radially outer direction with respect to said intersection point (AF).

11. Brake disc (10) according to any one of the previous claims, wherein said coupling seat (18) of the rotor (13) and/or said coupling seat (24) of the carrier (14) is within a reference circumference, said reference circumference having a diameter equal to or smaller than said second dimension (D2).

12. Brake disc (10) according to any one of the previous claims, wherein said coupling seat (18) of the rotor (13) and/or said coupling seat (24) of the carrier (14) is delimited by a first edge (30), a second edge (31) and two joining edges (32) that respectively extend between the first (30) and the second edge (31), wherein the first edge (30) symmetrically mirrors the second edge (31) with respect to said second reference axis (A2) and wherein said two joining edges (32) symmetrically mirror one another with respect to said first reference axis (A1).

13. Brake disc (10) according to any one of claims 1 to 3 or 5 to 12, wherein all of the connection areas (25) have a degree of translational freedom between the coupling seat (18) of the rotor (13) and the coupling seat (24) of the carrier (14).

## Patentansprüche

1. Fahrrad-Bremsscheibe (10), die umfasst:
einen Träger (14) mit einem Verbindungsabschnitt (12), der zur Verbindung mit einer Nabe eines Rades des Fahrrades konfiguriert ist, das um eine Drehachse (X) herum gedreht werden kann, und einer Vielzahl von Kopplungsaufnahmen (24);
einen Rotor (13), der eine radial außen liegende Brems-Flanke (15) sowie eine Vielzahl radial innen liegender Kopplungsaufnahmen (18) aufweist, die die Kopplungsaufnahmen (24) des Trägers (14) wenigstens teilweise axial überlappen, um Verbindungsbereiche (25) zu bilden;
wobei der Rotor (13) und der Träger (14) über mechanische Verbindungen (26), die in den Verbindungsbereichen (25) wirken, miteinander verbunden sind; und
die Fixierung zwischen wenigstens einer Kopplungsaufnahme (18) des Rotors (13) und einer Kopplungsaufnahme (24) des Trägers (14) in einem jeweiligen Verbindungsbereich (25) einen Verschiebungs-Freiheitsgrad aufweist,
**dadurch gekennzeichnet, dass**
in dem Verbindungsbereich (25), der einen Verschiebungs-Freiheitsgrad aufweist, die Kopplungsaufnahme (18) des Rotors (13) und/oder die Kopplungsaufnahme (24) des Trägers (14) ein Durchgangsloch (29) mit einer elliptischen Form aufweist oder durch dieses gebildet wird, das so ausgeführt ist, dass es die mechanische Verbindung (26) aufnimmt und eine erste Abmessung (D1) sowie eine zweite Abmessung (D2) hat, wobei die erste Abmessung (D1) und die zweite Abmessung (D2) auf einer ersten Bezugsachse (A1) bzw. einer zweiten Bezugsachse (A2) gemessen werden, die in einer ersten Bezugsebene (P1) liegen, die senkrecht zu der Drehachse (X) ist, die zweite Bezugsachse (A2) die erste Bezugsachse (A1) an einem Schnittpunkt (AF1) schneidet, die erste Abmessung (D1) mit der größeren Achse der elliptischen Form des Durchgangslochs (29) übereinstimmt und größer ist als die zweite Abmessung (D2), die mit der kleineren Achse der elliptischen Form der Durchgangsbohrung (29) übereinstimmt, und der Verschiebungs-Freiheitsgrad entlang der ersten Bezugsachse (A1) gerichtet ist.

2. Bremsscheibe (10) nach Anspruch 1, wobei der Rotor (13) wenigstens einen Kopplungsarm (18a) umfasst, der sich von der Brems-Flanke (15) radial nach innen erstreckt, und wenigstens eine der Kopplungsaufnahmen (18) des Rotors (13) an einem Ende des Kopplungsarms (18a) angeordnet ist.

3. Bremsscheibe (10) nach Anspruch 1 oder 2, wobei wenigstens eine Anzahl von Verbindungsbereichen (25), die der Hälfte der abgerundeten oder aufgerundeten Gesamtzahl von Verbindungsbereichen (25) entspricht, eine Fixierung zwischen der Kopplungsaufnahme (18) des Rotors (13) und der Kopplungsaufnahme (24) des Trägers (14) mit einem Verschiebungs-Freiheitsgrad aufweist.

4. Bremsscheibe (10) nach einem der vorangehenden Ansprüche, wobei Verbindungsbereiche (25), die eine Fixierung mit einem Verschiebungs-Freiheitsgrad aufweisen, sich mit Verbindungsbereichen (25) ohne Fixierung mit einem Verschiebungs-Freiheitsgrad abwechseln.

5. Bremsscheibe (10) nach einem der vorangehenden Ansprüche, wobei der Schnittpunkt (AF1) zwischen der ersten Bezugsachse (A1) und der zweiten Bezugsachse (A2) einen geometrischen Mittelpunkt der Kopplungsaufnahme (18) des Rotors (13) und/oder der Kopplungsaufnahme (24) des Trägers (14) bildet.

6. Bremsscheibe (10) nach Anspruch 2, wobei jeder Kopplungsarm (18a) mit der Brems-Flanke (15) in einem Abschnitt verbunden ist, der zwischen zwei Umfangs-Endpunkten (22, 23) liegt; und jede erste Bezugsachse (A1) durch den jeweiligen Verbindungsbereich (25) hindurch verläuft und ein Bezugssegment (SR) schneidet, das durch die zwei Umfangs-Endpunkte (22, 23) verläuft.

7. Bremsscheibe (10) nach Anspruch 2, wobei jeder Kopplungsarm (18a) in Umfangsrichtung durch eine erste Außenkante (20) und eine zweite Außenkante (21) begrenzt wird, und die erste Bezugsachse (A1) wenigstens an dem Verbindungsbereich (25) mit einer Richtung fluchtend ist, die zwischen der ersten (20) und der zweiten Außenkante (21) liegt.

8. Bremsscheibe (10) nach einem der vorangehenden Ansprüche, wobei die zweite Bezugsachse (A2) im Wesentlichen senkrecht zu der ersten Bezugsachse (A1) ist.

9. Bremsscheibe (10) nach einem der vorangehenden Ansprüche, wobei die erste Abmessung (D1) um wenigstens 1,5 % größer ist als die zweite Abmessung (D2).

10. Bremsscheibe (10) nach einem der vorangehenden Ansprüche, wobei die erste Bezugsachse (A1) einen Winkel (AN), dessen Absolutwert zwischen 0 und 80° liegt, in Bezug auf eine zweite Bezugsebene (P2) bildet, die senkrecht zu der ersten Bezugsebene (P1) ist und die Drehachse (X) einschließt, wobei der Winkel (AN) in der radial nach außen verlaufenden Richtung in Bezug auf den Schnittpunkt (AF) gemessen wird.

11. Bremsscheibe (10) nach einem der vorangehenden Ansprüche, wobei die Kopplungsaufnahme (18) des Rotors (13) und/oder die Kopplungsaufnahme (24) des Trägers (14) innerhalb eines Bezugsumfangs liegen/liegt, und der Bezugsumfang einen Durchmesser hat, der genauso groß ist wie oder kleiner als die zweite Abmessung (D2).

12. Bremsscheibe (10) nach einem der vorangehenden Ansprüche, wobei die Kopplungsaufnahme (18) des Rotors (13) und/oder die Kopplungsaufnahme (24) des Trägers (14) durch eine erste Kante (30), eine zweite Kante (31) und zwei Verbindungskanten (32) begrenzt werden/wird, die sich jeweils zwischen der ersten (30) und der zweiten Kante (31) erstrecken, wobei die erste Kante (30) die zweite Kante (31) in Bezug auf die zweite Bezugsachse (A2) symmetrisch spiegelt und die zwei Verbindungskanten (32) einander in Bezug auf die erste Bezugsachse (A1) symmetrisch spiegeln.

13. Bremsscheibe (10) nach einem der Ansprüche 1 bis 3 oder 5 bis 12, wobei alle der Verbindungsbereiche (25) einen Verschiebungs-Freiheitsgrad zwischen der Kopplungsaufnahme (18) des Rotors (13) und der Kopplungsaufnahme (24) des Trägers (14) aufweisen.

## Revendications

1. Disque de frein de bicyclette (10) comprenant :
un support (14) qui comporte une partie de connexion (12) qui est configurée pour une connexion sur un moyeu d'une roue de la bicyclette qui peut être entraînée en rotation autour d'un axe de rotation (X) et une pluralité de sièges de couplage (24) ;
un rotor (13) qui comprend une piste de freinage radialement externe (15) et une pluralité de sièges de couplage radialement internes (18) qui chevauchent axialement au moins partiellement les sièges de couplage (24) du support (14) de manière à définir des zones de connexion (25) ;
dans lequel ledit rotor (13) et ledit support (14) sont joints ensemble au moyen de joints mécaniques (26) qui sont actifs dans lesdites zones de connexion (25) ; et
la contrainte entre au moins un siège de couplage (18) du rotor (13) et un siège de couplage (24) du support (14) dans une zone de connexion respective (25) qui présente un degré de liberté en translation, **caractérisé en ce que**, dans ladite zone de connexion (25) qui présente un degré de liberté en translation, ledit siège de couplage (18) du rotor (13) et/ou ledit siège de couplage (24) du support (14) comporte(nt), ou sont/est défini(s) par, un trou traversant (29) qui présente une forme elliptique et qui est configuré pour recevoir ledit joint mécanique (26) et qui présente une première dimension (D1) et une seconde dimension (D2), dans lequel les première (D1) et seconde (D2) dimensions sont respectivement mesurées sur un premier axe de référence (A1) et sur un second axe de référence (A2) qui s'étendent sur un premier plan de référence (P1) qui est perpendiculaire audit axe de rotation (X), dans lequel le second axe de référence (A2) intersecte le premier axe de référence (A1) au niveau d'un point d'intersection (AF1), dans lequel ladite première dimension (D1) coïncide avec l'axe plus grand de la forme elliptique du trou traversant (29) et est plus grande que la seconde dimension (D2) qui coïncide avec l'axe plus petit de la forme elliptique du trou traversant (29) et dans lequel ledit degré de liberté en translation est dirigé suivant le premier axe de référence (A1).

2. Disque de frein (10) selon la revendication 1, dans lequel ledit rotor (13) comprend au moins un bras de couplage (18a) qui s'étend radialement vers l'intérieur par rapport à ladite piste de freinage (15), au moins l'un desdits sièges de couplage (18) du rotor (13) étant agencé sur une extrémité dudit bras de couplage (18a).

3. Disque de frein (10) selon la revendication 1 ou 2, dans lequel au moins les zones de connexion d'un nombre de zones de connexion (25) qui est égal à la moitié, arrondie par défaut ou par excès, du nombre total de zones de connexion (25) présentent une contrainte entre le siège de couplage (18) du rotor (13) et le siège de couplage (24) du support (14) avec un degré de liberté en translation.

4. Disque de frein (10) selon l'une quelconque des revendications précédentes, dans lequel des zones de connexion (25) qui présentent une contrainte avec un degré de liberté en translation sont en alternance avec des zones de connexion (25) sans contrainte avec un degré de liberté en translation.

5. Disque de frein (10) selon l'une quelconque des revendications précédentes, dans lequel ledit point d'intersection (AF1) entre le premier axe de référence (A1) et le second axe de référence (A2) définit un centre géométrique du siège de couplage (18) du rotor (13) et/ou du siège de couplage (24) du support (14).

6. Disque de frein (10) selon la revendication 2, dans lequel chaque bras de couplage (18a) est connecté à ladite piste de freinage (15) dans une partie qui est constituée entre deux points d'extrémité circonférentiels (22, 23) ; chaque premier axe de référence (A1) passant par la zone de connexion respective (25) et intersectant un segment de référence (SR) qui passe par les deux points d'extrémité circonférentiels (22, 23).

7. Disque de frein (10) selon la revendication 2, dans lequel chaque bras de couplage (18a) est délimité circonférentiellement par un premier bord externe (20) et par un second bord externe (21), dans lequel ledit premier axe de référence (A1) est aligné, au moins au niveau de ladite zone de connexion (25), avec une direction qui est constituée entre lesdits premier (20) et second (21) bords externes.

8. Disque de frein (10) selon l'une quelconque des revendications précédentes, dans lequel ledit second axe de référence (A2) est sensiblement perpendiculaire audit premier axe de référence (A1).

9. Disque de frein (10) selon l'une quelconque des revendications précédentes, dans lequel ladite première dimension (D1) est d'au moins 1,5 % plus importante que la seconde dimension (D2).

10. Disque de frein (10) selon l'une quelconque des revendications précédentes, dans lequel ledit premier axe de référence (A1) forme un angle (AN) qui est compris en valeur absolue entre 0 et 80° par rapport à un second plan de référence (P2) qui est perpendiculaire au premier plan de référence (P1) et qui contient ledit axe de rotation (X), ledit angle (AN) étant mesuré dans la direction radialement externe par rapport audit point d'intersection (AF).

11. Disque de frein (10) selon l'une quelconque des revendications précédentes, dans lequel ledit siège de couplage (18) du rotor (13) et/ou ledit siège de couplage (24) du support (14) sont/est à l'intérieur d'une circonférence de référence, ladite circonférence de référence présentant un diamètre qui est égal ou inférieur à ladite seconde dimension (D2).

12. Disque de frein (10) selon l'une quelconque des revendications précédentes, dans lequel ledit siège de couplage (18) du rotor (13) et/ou ledit siège de couplage (24) du support (14) sont/est délimité(s) par un premier bord (30), un second bord (31) et deux bords en jonction (32) qui s'étendent respectivement entre les premier (30) et second (31) bords, dans lequel le premier bord (30) est la symétrie miroir du second bord (31) par rapport audit second axe de référence (A2) et dans lequel lesdits deux bords en jonction (32) sont la symétrie miroir l'un de l'autre par rapport audit premier axe de référence (A1).

13. Disque de frein (10) selon l'une quelconque des revendications 1 à 3 ou 5 à 12, dans lequel toutes les zones de connexion (25) présentent un degré de liberté en translation entre le siège de couplage (18) du rotor (13) et le siège de couplage (24) du support (14).
